# EUROPÄISCHE PATENTSCHRIFT

(11) **EP 0 872 661 B1**
(45) Veröffentlichungstag und Bekanntmachung des Hinweises auf die Patenterteilung: **30.01.2002**
(21) Anmeldenummer: 98105504.9
(22) Anmeldetag: 26.03.1998
(51) Int. Cl.: F16D 65/56

(54) **Baueinheit für eine Trommelbremse und damit ausgestattete Trommelbremse**
Assembly for a drum brake and drum brake equipped therewith
Assemblage pour frein à tambour et frein à tambour ainsi équipé

(30) Priorität: 15.04.1997 DE 19715718
(43) Veröffentlichungstag der Anmeldung: 21.10.1998
(73) Patentinhaber: Lucas Industries Limited, London W1Y 4DJ (GB)
(72) Erfinder: Krautkremer, Hubert, Mülheim-Kärlich (DE); Biebricher, Frank, 65558 Gückingen (DE); Lüdtke, Peter Johannes, 53424 Remagen (DE); Chau, Thanh Duc, 56073 Koblenz (DE); Jungmann, Karl-Heinz, 65566 Neuwied (DE)
(74) Vertreter: Beyer, Andreas, Dr.

(56) Entgegenhaltungen:
- DE-A- 2 508 614
- DE-A- 2 846 473
- US-A- 4 276 966
- US-A- 4 533 024
- US-A- 4 706 783

## Beschreibung

Die Erfindung betrifft eine Baueinheit für eine Trommelbremse, wobei die Baueinheit zumindest eine Bremsbacke und eine Nachstelleinrichtung aufweist, die eine Nachstellstrebe, ein Klinken-Rastrad-Getriebe und einen die Klinke aufweisenden Nachstellhebel umfaßt, und wobei die Bremsbacke einen Steg aufweist, an dem sich die Nachstellstrebe abstützt und an dem der Nachstellhebel mittels eines Lagerstiftes schwenkbar gelagert ist.

Die DE 25 08 614 C2 beschreibt bereits eine Trommelbremse mit einer selbsttätigen Nachstelleinrichtung zum Belagverschleißausgleich, die eine solche Baueinheit enthält. Bei der selbsttätigen Nachstelleinrichtung gemäß der DE 25 08 614 C2 ist zwischen einem der Bremsbacken und einem mechanischen Betätigungshebel der Bremse eine längeneinstellbare Nachstellstrebe angeordnet, die durch Federkraft in Anlage an der anderen Bremsbacke gehalten wird. Ein Nachstellhebel ist an der einen Bremsbacke schwenkbar gelagert und greift in ein an der Nachstellstrebe drehbar gelagertes Rastrad ein, durch dessen Drehung die Länge der Nachstellstrebe in Belagverschleiß ausgleichendem Sinne verstellt wird. Der Nachstellhebel ist als zweiarmiger Hebel ausgebildet, dessen einer Arm die Klinke trägt und dessen anderer Arm durch eine Feder stets axial gegen das nachstellhebelseitige Ende der Strebe vorgespannt ist. Der Stand der Technik gemäß der DE 25 08 614 C2 wird nachfolgend als bekannt vorausgesetzt.

Eine ähnliche Trommelbremse, die ebenfalls eine wie eingangs beschrieben ausgeführte Baueinheit enthält, ist aus der EP 0 575 825 B1 bekannt. Dort ist der Nachstellhebel zumindest teilweise als Bimetallbauteil ausgebildet, um eine übermäßige Belagnachstellung zu verhindern, zu der es bei herkömmlichen Trommelbremsen infolge einer im Betrieb auftretenden Wärmeausdehnung der Bremse kommen kann.

Damit eine Nachstelleinrichtung der beschriebenen Art in einer Trommelbremse funktionieren kann, ist eine Lagerstelle für den Nachstellhebel erforderlich. Üblicherweise - so auch bei den beiden zuvor beschriebenen, aus dem Stand der Technik bekannten Trommelbremsen - ist diese Lagerstelle durch einen Stift oder eine Hülse gebildet, die in eine entsprechende Ausnehmung im Bremsbackensteg eingepreßt ist. Nachträglich, d.h. bei einer bereits ausgelieferten und im Betrieb befindlichen Trommelbremse, läßt sich eine solche Lagerstelle nur unter erheblichem Aufwand nachrüsten, zumal die Lagerstelle nicht irgendwo sondern an einem genau definierten Ort vorhanden sein muß. In aller Regel wurden deshalb bisher Trommelbremsen nicht mit einer Nachstelleinrichtung nachgerüstet.

Der Erfindung liegt die Aufgabe zugrunde, eine Möglichkeit anzugeben, mit der eine Trommelbremse auf einfache und kostengünstige Art und Weise und vor allem auch nachträglich mit einer Nachstelleinrichtung zum Ausgleichen von Bremsbelagverschleiß versehen werden kann, ohne daß eine diesbezügliche Festlegung bereits bei der Produktion der Trommelbremse und insbesondere ihrer Bremsbacken getroffen werden muß.

Diese Aufgabe ist ausgehend von einer gattungsgemäßen Baueinheit erfindungsgemäß dadurch gelöst, daß der Lagerstift für den Nachstellhebel an einem separaten Haltebauteil befestigt ist, das klemmend auf den Steg der Bremsbacke aufschiebbar ist und das mindestens eine erste Abkröpfung aufweist, die in eine im Steg vorhandene Ausnehmung formschlüssig eingreift. Erfindungsgemäß braucht demnach keine Ausnehmung für den Lagerstift im Bremsbackensteg und kein darin eingepreßter Lagerstift mehr vorhanden zu sein, sondern der Lagerstift wird bei Bedarf dadurch vorgesehen, daß das separate Haltebauteil einfach auf den Bremsbackensteg aufgeschoben wird. Der klemmende Sitz des Haltebauteils sichert in Verbindung mit der formschlüssig in eine im Bremsbackensteg ohnehin vorhandene Ausnehmung eingreifende Abkröpfung eine sichere und vor allem auch positionsgenaue Befestigung des Lagerstifts. Die Erfindung macht sich die Tatsache zunutze, daß in dem auch Stegblech genannten Bremsbackensteg ohnehin mehrere Durchbrüche vorhanden sind. Diese dienen beispielsweise zum Einhängen von Bremsbackenrückholfedern, zur Befestigung einer Bremsbacken-Niederhalteeinrichtung und ähnlichem. In eine dieser Durchbrüche bzw. Ausnehmungen greift die erste Abkröpfung des separaten Haltebauteils, an dem der Lagerstift erfindungsgemäß befestigt ist, formschlüssig ein und sichert so einen unverrückbaren Sitz des Haltebauteils und damit des Lagerstifts an einer gewünschten, genau festgelegten Position. Vorteilhaft greift die erste Abkröpfung in eine Ausnehmung des Bremsbackenstegs ein, die in der Nähe der für den Lagerstift gewünschten Position gelegen ist, um die Abmessungen des Haltebauteils klein zu halten.

Das Haltebauteil der erfindungsgemäßen Baueinheit umfaßt bevorzugt eine plattenförmige Basis, die großflächig auf dem Bremsbackensteg aufliegt und aus der sich der Lagerstift senkrecht zum Bremsbackensteg und von diesem weg erstreckt. Der Lagerstift kann dabei beispielsweise durch eine materialschlüssige Verbindung wie etwa Schweißen etc. mit der plattenförmigen Basis verbunden sein, jedoch kann die plattenförmige Basis auch eine Durchgangsöffnung aufweisen, in der der Lagerstift vorzugsweise durch einen Preßsitz aufgenommen ist. Die plattenförmige Basis ist zumindest im wesentlichen eben.

Gemäß einer bevorzugten Ausführungsform ist die plattenförmige Basis um eine Durchgangsöffnung für den Lagerstift herum aus der Ebene der Basis kegelstumpfförmig vom Bremsbackensteg weg verformt, wobei der Durchmesser der Durchgangsöffnung geringfügig kleiner als der Durchmesser des Lagerstiftes ist. Der Lagerstift ist dann als separates Bauteil mit einem etwas verdickten Fuß ausgeführt, das von der dem Bremsbackensteg zugewandten Seite des Haltebauteils aus durch die Durchgangsöffnung gepreßt wird, bis der verdickte Fuß an der kegelstumpfförmigen Ausformung anschlägt. Die kegelstumpfförmige Ausformung ermöglicht zum einen die Aufnahme des verdickten Fußes des Lagerstiftes und zum anderen das relativ einfache Durchpressen des geringfügig durchmessergrößeren Lagerstiftes durch die Durchgangsöffnung, wobei der Lagerstift nach dem Durchpressen aufgrund einer gewissen Rückfederung der kegelstumpfförmigen Ausformung absolut sicher mit dem Haltebauteil verbunden ist.

Gemäß einer bevorzugten Weiterbildung der zuvor beschriebenen Ausführungsform ist der Lagerstift von einer handelsüblichen Stahlhohlniete gebildet, deren Fuß unterhalb der kegelstumpfförmigen Verformung und in der Ebene der plattenförmigen Basis angeordnet ist. Auf diese Weise stützt sich der mit dem Haltebauteil verbundene Lagerstift direkt auf dem Bremsbackensteg ab. Selbstverständlich kann eine solche Abstützung auch bei der zuvor beschriebenen Ausführungsform durch eine entsprechende Ausbildung des verdickten Fußes erreicht werden.

Bei allen bisher beschriebenen Ausführungsformen der erfindungsgemäßen Baueinheit weist das Haltebauteil vorteilhaft einen mit der plattenförmigen Basis verbundenen, U-förmigen Abschnitt auf, der auf den Bremsbackensteg aufschiebbar ist und durch den der klemmende Sitz des Haltebauteils erzielt wird. Obwohl das Haltebauteil mehrere Abkröpfungen aufweisen kann, die formschlüssig in verschiedene Ausnehmungen des Bremsbackenstegs eingreifen, reicht zur positionsgenauen und sicheren Festlegung des Haltebauteils am Bremsbackensteg die erwähnte, erste Abkröpfung aus, insbesondere dann, wenn diese entfernt von dem zuvor genannten U-förmigen Abschnitt angeordnet ist.

Vorteilhaft wird die klemmende Wirkung des U-förmigen Abschnitts durch zwei sich gleichsinnig erstreckende und zueinander annähernd parallele Schenkel desselben erreicht, deren Abstand voneinander im Bereich des freien Endes des oder der Schenkel kleiner als die Dicke des Bremsbackensteges ist. Die Schenkel brauchen nicht gleich lang zu sein, sondern können ohne weiteres auch unterschiedlich lang sein. Gemäß einer Weiterbildung ist einer der beiden Schenkel Teil der plattenförmigen Basis des Haltebauteils, d.h. ein Teil der plattenförmigen Basis oder auch eine Fortsetzung derselben wird als Schenkel genutzt.

Bei bevorzugten Ausführungsformen der erfindungsgemäßen Baueinheit weist das Haltebauteil eine entgegengesetzt zur ersten Abkröpfung gerichtete zweite Abkröpfung auf, die der Abstützung der Nachstellstrebe in im wesentlichen radialer Richtung der Trommelbremse dient. In einer Weiterbildung ist am Haltebauteil eine gleichsinnig zur zweiten Abkröpfung gerichtete und benachbart derselben angeordnete dritte Abkröpfung derart vorhanden, daß die zweite Abkröpfung die Nachstellstrebe radial innen und die dritte Abkröpfung die Nachstellstrebe radial außen abstützt. Die Nachstellstrebe ist somit zwischen der zweiten und der dritten Abkröpfung geführt. Eine Abstützung der Nachstellstrebe insbesondere radial innen verhindert eine in dieser Richtung erfolgende Verlagerung der Nachstellstrebe, zu der es beispielsweise dann kommen kann, wenn die Nachstelleinrichtung aufgrund starker Verschmutzung nicht mehr funktioniert. Die wirksame Länge der Nachstelleinrichtung zwischen den beiden Bremsbacken der Trommelbremse vergrößert sich dann nämlich trotz zunehmenden Belagverschleißes nicht mehr und die Nachstellstrebe kann dann aufgrund der sich allmählich weiter voneinander entfernenden Bremsbacken radial nach innen in Richtung auf das Zentrum der Trommelbremse wandern, wodurch die Abstützung der Bremsbacken im unbetätigten Zustand der Bremse nicht mehr wie vorgesehen gewährleistet ist.

Bei allen zuvor genannten Ausführungsformen besteht das Haltebauteil bevorzugt aus einem Federstahl. Es ist vorteilhaft mit allen seinen Abkröpfungen, Ausformungen und Schenkeln als - abgesehen vom Lagerstift - einstückiges Blechformteil ausgebildet. Obwohl bisher nicht erwähnt, ist klar, daß in der Regel ein bestimmtes Haltebauteil nur bei einer bestimmten Trommelbremse bzw. einem bestimmten Bremsbacken verwendet werden kann. Zur Nachrüstung einer Nachstelleinrichtung in einer anderen Trommelbremse braucht jedoch im wesentlichen nur das kostengünstig zu fertigende Haltebauteil entsprechend angepaßt zu werden, insbesondere hinsichtlich der Position des Lagerstiftes und der formschlüssig eingreifenden, ersten Abkröpfung.

Zwar lassen sich mit einer erfindungsgemäßen Baueinheit Trommelbremsen mit einer Nachstelleinrichtung zum Belagverschleißausgleich problemlos nachrüsten, jedoch kann die erfindungsgemäße Art der Bereitstellung eines Lagerstiftes ohne weiteres auch bei der Herstellung fabrikneuer Trommelbremsen eingesetzt werden, die von vornherein mit einer Nachstelleinrichtung ausgerüstet sein sollen. Da der Bremsbacken selbst keine Lagerstelle aufzuweisen braucht, kann ein und derselbe Bremsbacken sowohl für Trommelbremsen mit Nachstelleinrichtung als auch für Trommelbremsen ohne Nachstelleinrichtung verwendet werden, mit den sich daraus ergebenden Vorteilen bei Fertigung und Lagerhaltung.

Erfindungsgemäße Baueinheiten werden auch als sog. Reparatursätze vertrieben. Üblicherweise umfaßt die erfindungsgemäße Trommelbremsenbaueinheit dann einen zweiten Bremsbacken und zwischen den beiden Bremsbacken erstrecken sich zwei Bremsbackenrückzugsfedern. Ein solcher Reparatursatz wird beispielsweise benötigt, wenn die auf den Bremsbacken vorhandenen Reibbeläge verschlissen sind. Die erfindungsgemäße Trommelbremsenbaueinheit ersetzt dann die entsprechenden, abgenutzten oder gealterten Teile der Trommelbremse, wobei zugleich die Nachrüstung mit einer Nachstelleinrichtung erfolgen kann.

Ein Ausführungsbeispiel einer erfindungsgemäßen Trommelbremsenbaueinheit sowie eine damit ausgestattete Trommelbremse werden im folgenden anhand der beigefügten Figuren näher erläutert. Es zeigt:
- Fig. 1: die teilweise geschnitten wiedergegebene Draufsicht auf eine Trommelbremse mit einer erfindungsgemäßen Baueinheit,
- Fig. 2A: eine vergrößerte Darstellung des oberen Teils des linken Bremsbackens aus Fig. 1 mit montiertem Haltebauteil,
- Fig. 2B: den Schnitt B-B aus Fig. 2A,
- Fig. 2C: den Schnitt C-C aus Fig. 2A,
- Fig. 2D: den Schnitt A-A aus Fig. 2A,
- Fig. 3: einen Schnitt ähnlich Fig. 2C in stark vergrößerter Darstellung,
- Fig. 4A bis 4D: Ansichten ähnlich Fig. 2A, jedoch von abgewandelten Ausführungsformen des Haltebauteils,
- Fig. 5: eine Ansicht ähnlich Fig. 2A, jedoch mit montierter Nachstelleinrichtung, und
- Fig. 6: eine erfindungsgemäße Baueinheit mit zwei Bremsbakken, einer Nachstelleinrichtung und einer Bremsbakkenrückholfeder.

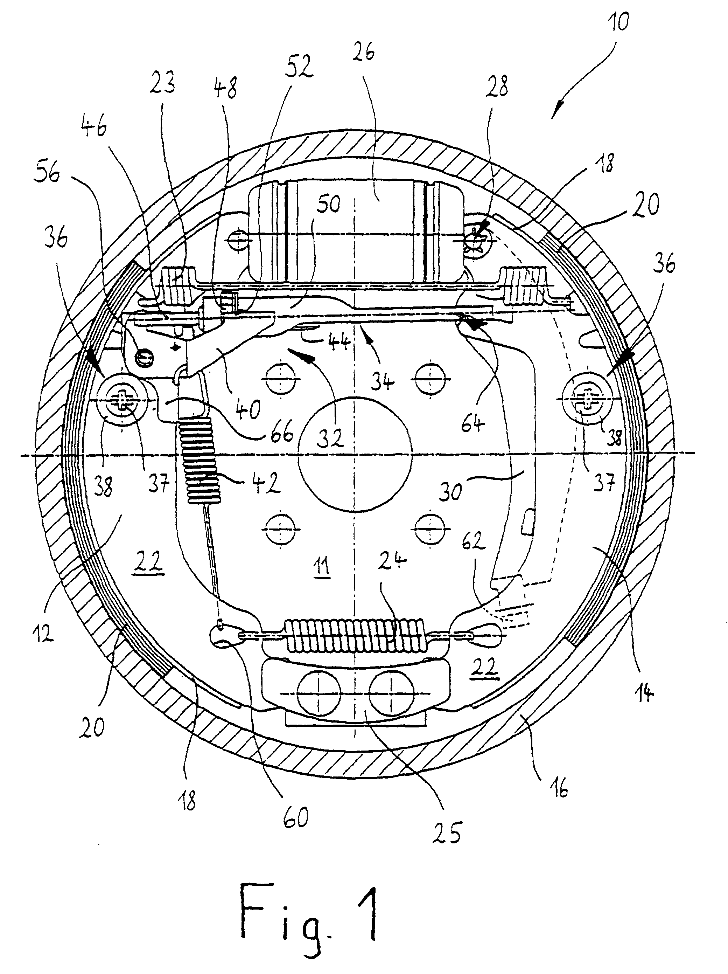

Die in Figur 1 dargestellte Trommelbremse 10 hat eine Ankerplatte 11, die zur Befestigung an der Achse eines Kraftfahrzeugs vorgesehen ist, sowie zwei Bremsbacken 12 und 14, die an der Ankerplatte 11 derart verschiebbar geführt sind, daß sie sich an eine Bremstrommel 16 anlegen lassen. Jeder der Bremsbacken 12, 14 weist ein kreisbogenförmiges Belagblech 18, an dem ein Reibbelag 20 befestigt ist, und einen an dem Belagblech 18 befestigten Steg 22 auf, der parallel zur Ankerplatte 11 angeordnet ist. Zwischen den beiden Bremsbacken 12 und 14 erstrecken sich zwei Bremsbackenrückzugsfedern 23 und 24, die die Bremsbacken 12 und 14 aufeinander zu und von der Bremstrommel 16 weg vorspannen. Die von der Bremsbackenrückzugsfeder 24 auf die Bremsbacken 12, 14 ausgeübten Kräfte werden über ein an der Ankerplatte 11 befestigtes Widerlager 25 in die Ankerplatte 11 eingeleitet. Mittels eines hydraulischen Radbremszylinders 26 können die Bremsbacken 12 und 14 gegen die Kraft der Bremsbakkenrückzugsfedern 23 und 24 voneinander weg und in Anlage mit der Bremstrommel 16 gepreßt werden. Zur rein mechanischen Betätigung der Trommelbremse, beispielsweise im Zuge der Benutzung als Feststellbremse, ist an der Bremsbacke 14 bei 28 ein Betätigungshebel 30 gelagert, der über eine einer Nachstelleinrichtung 32 zugehörigen Nachstellstrebe 34 gegen die andere Bremsbacke 12 drückt.

Jeder der beiden Bremsbacken 12 und 14 wird durch eine Bremsbacken-Niederhalteeinrichtung 36 üblicher Bauart (hier im wesentlichen bestehend aus je einem Niederhaltestift 37, einem Federteller 38 und einer darunter angeordneten, in Fig. 1 nicht sichtbaren Schraubenfeder) in Anlage an der Ankerplatte 11 gehalten.

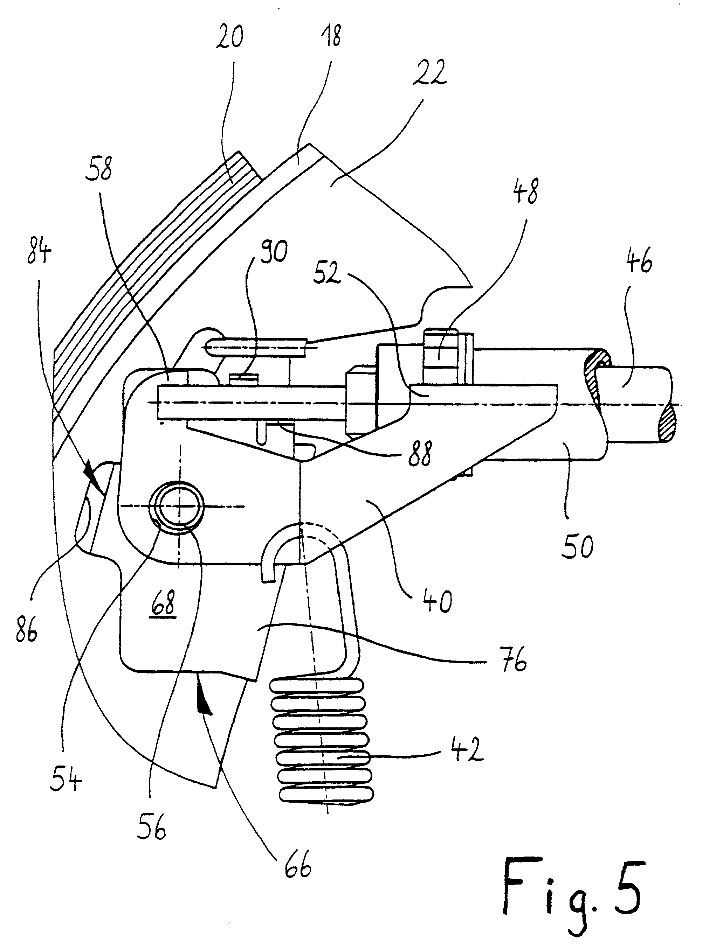

Die zwischen den beiden Bremsbacken 12 und 14 angeordnete Nachstelleinrichtung 32 umfaßt die bereits genannte Nachstellstrebe 34, die sich mit ihren gabelförmig ausgebildeten Enden am Steg 22 der Bremsbacke 12 bzw. am Betätigungshebel 30 abstützt, einen Nachstellhebel 40, und eine letzteren vorspannende Nachstellfeder 42. Die Nachstellstrebe 34 besteht aus einer mit einem Gewinde 44 versehenen Druckstange 46, einem auf dem Gewinde 44 der Druckstange 46 verdrehbaren Sperr- oder Rastrad 48 (auch Nachstellritzel genannt), und einer Druckhülse 50. Der Nachstellhebel 40, dessen Gestalt genauer aus Figur 5 hervorgeht, ist als zweiarmiger Hebel ausgebildet, wobei am freien Ende seines längeren Armes eine Klinke 52 zum Eingriff mit dem Rastrad 48 vorhanden ist. An seiner Basis hat der Nachstellhebel 40 ein Auge 54 (sh. Fig. 5), durch das sich der Lagerstift 56 erstreckt, auf den später noch näher eingegangen werden wird. Wie aus Fig. 1 und insbesondere aus Fig. 5 hervorgeht, ist der Nachstellhebel 40 auf diese Weise auf dem Stift 56 drehbar gelagert.

Der kürzere Arm des Nachstellhebels 40 hat einen Endabschnitt 58, der in einen Spalt eingreift (sh. Fig. 1, 5), der zwischen dem Steg 22 der Bremsbacke 12 und dem gabelförmig ausgebildeten Ende der Druckstange 46 vorhanden ist. Die Nachstellfeder 42, deren eines Ende in den Nachstellhebel 40 und deren anderes Ende in eine Ausnehmung 60 im Steg 22 der Bremsbacke 12 eingehängt ist (siehe Fig. 1), spannt den drehbar gelagerten Nachstellhebel 40 bezogen auf Fig. 1 im Uhrzeigersinn vor, so daß die Klinke 52 auf das Rastrad 48 eine bezogen auf Fig. 1 nach unten wirkende Kraft ausüben kann.

Im folgenden wird die Funktion der Nachstelleinrichtung näher erläutert. Es sei dabei zunächst auf eine mechanische, üblicherweise per Hand erfolgende Betätigung der dargestellten Trommelbremse mittels des Betätigungshebels 30 eingegangen. Wird ein mit einem hier nicht dargestellten Handbremshebel verbundenes Bremsseil (nicht gezeigt), dessen Ende am Betätigungshebel 30 in eine Bremsseilaufnahme 62 eingehängt ist, in Fig. 1 nach links gezogen, so schwenkt der Betätigungshebel 30 im Uhrzeigersinn um sein Lager 28 und drückt dabei über die Nachstellstrebe 34 die Bremsbacke 12 an die Bremstrommel 16. Sodann schwenkt der Betätigungshebel 30 um eine Anlagestelle 64 an der Nachstellstrebe 34 bzw. der Druckstange 46 und drückt dabei über sein Lager 28 die in Fig. 1 rechte Bremsbacke 14 an die Bremstrommel 16. Das Bremsmoment wird über das Widerlager 25 in die Ankerplatte 11 und von dieser in die nicht dargestellte Fahrzeugachse eingeleitet. Nach einem Lösen der Bremse ziehen die Backenrückzugsfedern 23, 24 die Bremsbacken 12 und 14 wieder zurück in ihre Ruhestellung, in der die Reibbeläge 20 nicht im Eingriff mit der Bremstrommel 16 sind.

Bei einer hydraulischen Betätigung der Trommelbremse drücken nicht dargestellte Kolben des Radbremszylinders 26 die Bremsbacken 12, 14 gegen die Bremstrommel 16. Die Nachstellstrebe 34 wird hierbei entlastet, so daß der federnd vorgespannte Nachstellhebel 40 mittels seiner Klinke 52 das Rastrad 48 etwas nach unten (bezogen auf Fig. 1) verdrehen kann, falls das Bremslüftspiel aufgrund von Reibbelagverschleiß ein bestimmtes Maß überschritten hat. Die Drehung des Rastrades 48 auf dem Gewinde 44 der Druckstange 46 bewirkt dann eine Verlängerung der Nachstellstrebe 34. Beim Lösen der Trommelbremse übt das in Fig. 1 linke Ende der Nachstellstrebe 34 Druck auf den kurzen Arm des Nachstellhebels 40 aus, so daß dieser sich etwas im Gegenuhrzeigersinn dreht, wodurch die Klinke 52 am langen Arm des Nachstellhebels 40 an der Flanke desjenigen Zahnes des Rastrades 48 hochläuft, mit dem sich die Klinke 52 gerade in Eingriff befindet, und schließlich über dessen Zahnspitze springt, um dann hinter die nächste Zahnflanke zu greifen. Die Nachstelleinrichtung 32 ist damit bereit für einen neuen Nachstellvorgang.

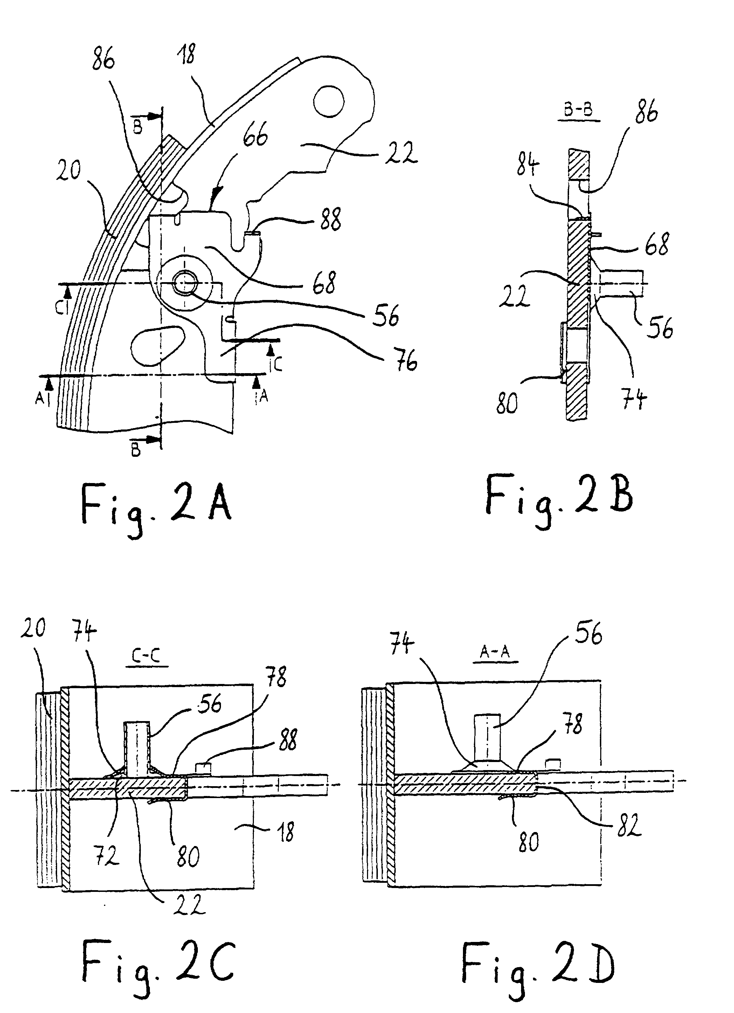

Anhand von Fig. 2A bis 2D werden nun der Lagerstift 56 und seine Anordnung am Bremsbacken 12 näher beschrieben. Im Gegensatz zu herkömmlichen Konstruktionen ist der Lagerstift 56 vorliegend nicht in ein Loch eingepreßt, das in den Steg 22 des Bremsbackens 12 gestanzt ist, sondern ist an einem separaten Haltebauteil 66 befestigt, das klemmend auf den Steg 22 des Bremsbackens 12 aufgeschoben ist.

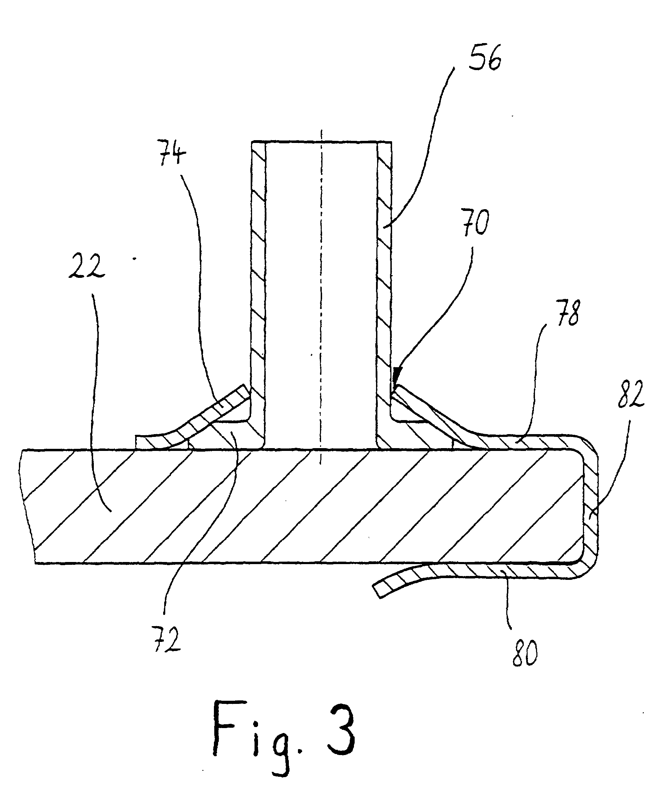

Das Haltebauteil 66 hat eine plattenförmige Basis 68 mit einer runden Durchgangsöffnung 70 (siehe Fig. 3), in der der Lagerstift 56 aufgenommen ist. Die plattenförmige Basis 68 ist im wesentlichen eben und liegt wie dargestellt großflächig auf dem Bremsbackensteg 22 auf, während der Lagerstift 56 sich normal zur Basis 68 und damit zum Steg 22 erstreckt und durch die Basis 68 am Steg 22 abgestützt ist.

Im dargestellten Ausführungsbeispiel wird der Lagerstift 56 von einer handelsüblichen Stahlhohlniete mit einem verbreiterten Fuß 72 gebildet. Zur Aufnahme dieses Fußes 72 ist die plattenförmige Basis 68 des Haltebauteils 66 um die Durchgangsöffnung 70 herum wie in den Figuren bei 74 dargestellt aus der Ebene der Basis 68 kegelstumpfförmig vom Bremsbackensteg 22 weg verformt. Der Durchmesser der Durchgangsöffnung 70 ist geringfügig kleiner als der Außendurchmesser des Lagerstiftes 56, so daß nach dessen Durchführung durch die Durchgangsöffnung 70 die den Lagerstift 56 bildende Stahlhohlniete durch einen Preßsitz in der Basis 68 gehalten ist, der noch durch einen gewissen Rückfedereffekt der kegelstumpfförmigen Ausformung 74 verstärkt wird. Die Größe der Ausformung 74 ist so gewählt, daß der Fuß 72 der Stahlhohlniete vollständig in der Ausformung 74 Platz findet und sich seine dem Steg 22 zugewandte Fläche mit der sich daran anschließenden Fläche der plattenförmigen Basis 68 in einer Ebene befindet. Auf diese Weise stützt sich der Lagerstift 56 über seinen Fuß 72 auch direkt auf dem Steg 22 des Bremsbackens 12 ab (sh. hierzu auch Fig. 3).

Zur klemmenden Befestigung des Haltebauteils 66 am Steg 22 des Bremsbackens 12 weist ersteres einen U-förmigen Abschnitt 76 auf, der einstückig mit der plattenförmigen Basis 68 verbunden ist und der zwei sich gleichsinnig erstreckende und zueinander annähernd parallele Schenkel 78 und 80 umfaßt. Die beiden Schenkel 78 und 80 sind durch ein sich rechtwinklig zu ihnen erstreckendes Basisstück 82 miteinander verbunden. Im Bereich ihrer freien Enden ist der Abstand der beiden Schenkel 78, 80 voneinander dann, wenn das Haltebauteil 66 nicht auf den Steg 22 aufgeschoben ist, geringer als die Dicke des Stegs 22. Beim Aufschieben auf den Steg 22 werden die beiden federnden Schenkel 78 und 80 dann etwas auseinandergedrückt und üben eine Klemmkraft auf den Steg 22 aus.

Damit der Lagerstift 56 eine vorherbestimmte, genau definierte Position einnimmt, wird das Haltebauteil 66 zum einen so weit auf den Steg 22 aufgeschoben, bis das die beiden Schenkel 78 und 80 verbindende Basisstück 82 des U-förmigen Abschnitts 76 am Rand des Stegs 22 anschlägt. Zum anderen weist das Haltebauteil 66 zumindest eine erste Abkröpfung 84 (sh. Fig. 2B) auf, die sich von seiner Basis 68 rechtwinklig zum Bremsbackensteg 22 hin erstreckt und formschlüssig in eine Ausnehmung 86 im Steg 22 eingreift, wenn das Haltebauteil 66 vollständig auf den Steg 22 aufgeschoben worden ist. Die Abkröpfung 84 ist so dimensioniert, daß ein Verschieben des Haltebauteils 66 nach dem formschlüssigen Einrasten der Abkröpfung 84 in der Ausnehmung 86 nicht mehr möglich ist. Auf diese Weise ist das Haltebauteil 66 mittels des U-förmigen Abschnitts 76 und der ersten Abkröpfung 84 im Betrieb positionsgenau und praktisch unverrückbar am Bremsbackensteg 22 festgelegt. Weist das Haltebauteil 66 nur eine solche Abkröpfung 84 auf, dann sollte diese entfernt vom U-förmigen Abschnitt 76 angeordnet sein, um eine möglichst verdrehsichere Festlegung des Haltebauteils 66 zu erreichen.

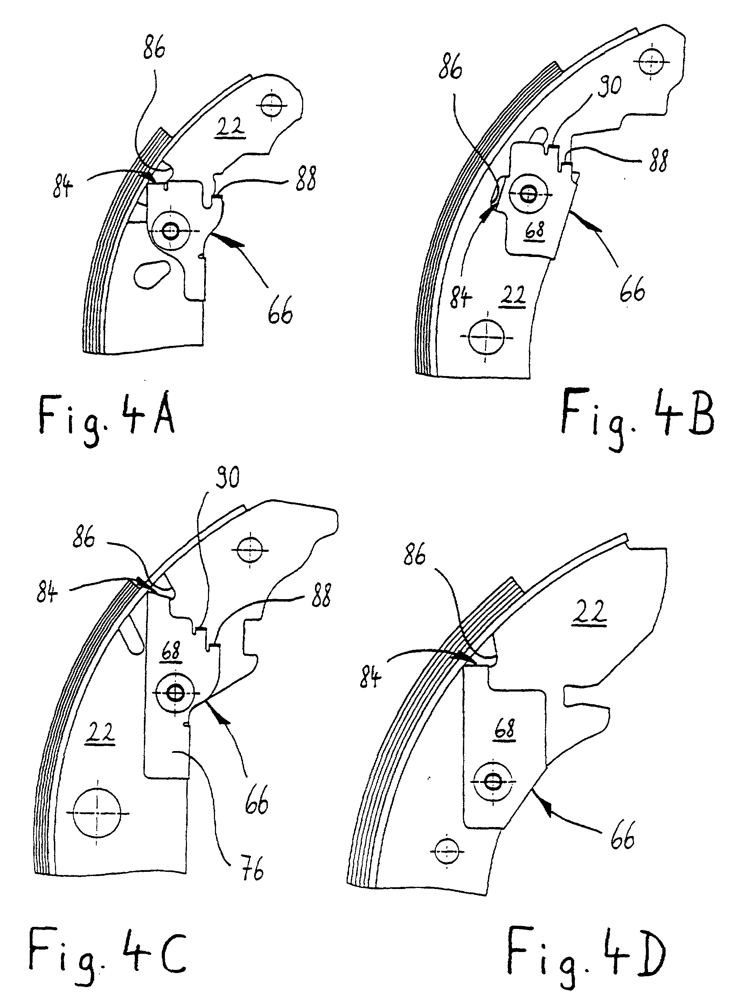

Die gezeigte Lage der Ausnehmung 86 im Bremsbackensteg 22 stellt nur ein Beispiel dar. Die genaue Lage dieser Ausnehmung 86 ist nicht entscheidend, vielmehr kann jede im Bremsbackensteg 22 bereits vorhandene und nicht anderweitig benötigte Ausnehmung in der Nähe der Position des Lagerstifts 56 für den formschlüssigen Eingriff der ersten Abkröpfung 84 herangezogen werden. Die Figuren 4A bis 4D zeigen hierzu Beispiele entsprechend abgewandelter Haltebauteile 66. Fig. 4B und Fig. 4D zeigen hierbei Ausführungsformen, bei denen der U-förmige Abschnitt 76 in die plattenförmige Basis 68 integriert ist, d.h. der in den Figuren obere Schenkel 78 des U-förmigen Abschnitts 76 wird vollständig von der plattenförmigen Basis 68 gebildet.

Zusätzlich zur ersten Abkröpfung 84 kann das Haltebauteil 66 auch eine entgegengesetzt zur ersten Abkröpfung gerichtete zweite Abkröpfung 88 aufweisen (sh. Fig. 2A). Diese zweite Abkröpfung 88 dient zur Abstützung der Nachstellstrebe 34 in im wesentlichen radialer Richtung der Trommelbremse und verhindert beispielsweise eine radiale Verlagerung der Nachstellstrebe 34 in Richtung des Zentrums der Trommelbremse dann, wenn die Nachstelleinrichtung 32 etwa aufgrund einer starken Verschmutzung nicht mehr richtig funktioniert, d.h. die Länge der Nachstellstrebe 34 sich trotz zunehmendem Verschleiß der Reibbeläge 20 nicht mehr verlängert. Ist die Nachstellstrebe 34 in einem solchen Fall nicht ausreichend in den Bremsbackenstegen 22 selbst gegen eine radiale Verlagerung gesichert, kann die Nachstellstrebe 34 aufgrund des zunehmenden Abstandes der beiden Bremsbacken 12 und 14 voneinander nach innen, d.h. zum Zentrum der Trommelbremse hin wandern, wodurch die Funktion der Trommelbremse beeinträchtigt werden kann.

In Ergänzung zur zweiten Abkröpfung 88 kann benachbart derselben eine gleichsinnig gerichtete, dritte Abkröpfung 90 am Haltebauteil 66 vorhanden sein, derart, daß die zweite Abkröpfung 88 die Nachstellstrebe 34 gegen eine Verlagerung radial nach innen und die dritte Abkröpfung 90 die Nachstellstrebe 34 gegen eine Verlagerung radial nach außen abstützt. Die Figuren 4B und 4C zeigen Haltebauteile 66 mit zweiten und dritten Abkröpfungen 88 bzw. 90. In Übereinstimmung mit der ersten Abkröpfung 84 ist auch die zweite Abkröpfung 88 und die dritte Abkröpfung 90 rechtwinklig aus der plattenförmigen Basis 68 des Haltebauteils 66 abgebogen bzw. abgekantet.

In Fig. 5 ist ein Haltebauteil 66 gemäß Fig. 4B mit darauf gelagertem Nachstellhebel 40 und montierter Nachstelleinrichtung 32 gezeigt. Es ist gut zu erkennen, wie die Druckstange 46 zwischen der zweiten Abkröpfung 88 und der dritten Abkröpfung 90 gegen eine Verlagerung radial nach innen als auch radial nach außen geführt ist.

In den beschriebenen Ausführungsbeispielen ist das Haltebauteil 66 wie aus den Figuren ersichtlich abgesehen vom Lagerstift 56 einstückig ausgebildet und besteht aus einem Federstahl. Andere Metalle oder auch entsprechend stabile Kunststoffe sind als Material für das Haltebauteil 66 ebenfalls möglich.

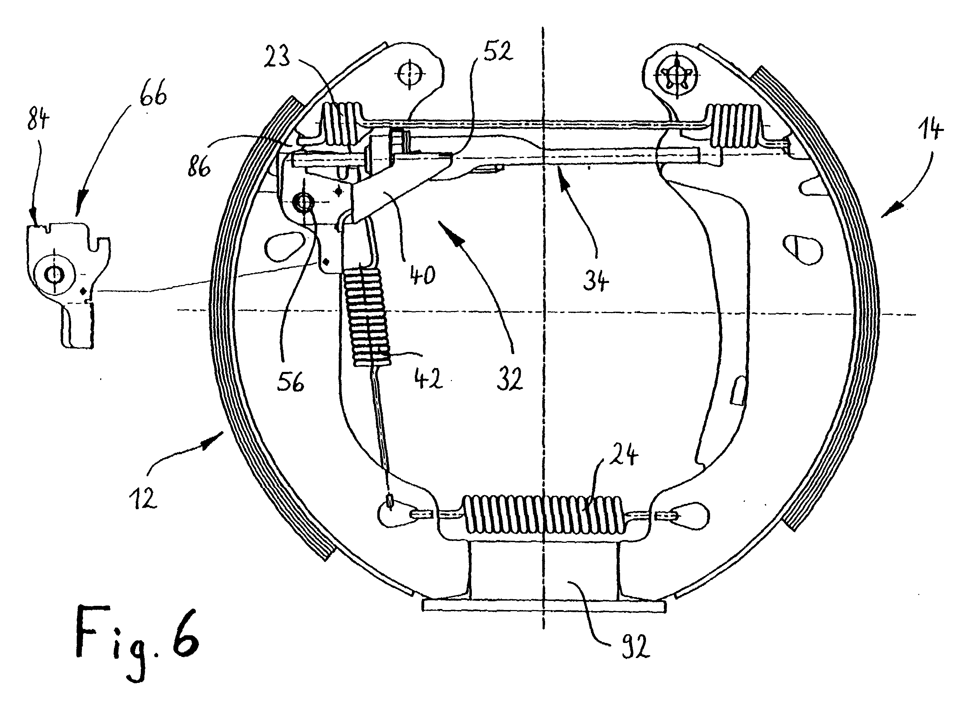

In Fig. 6 ist eine aus den zwei Bremsbacken 12 und 14, der Nachstellstrebe 34, dem Nachstellhebel 40, den beiden Bremsbakken-Niederhalteeinrichtungen 36, der Nachstellfeder 42, den beiden Bremsbackenrückzugsfedern 23 und 24, und dem Betätigungs-hebel 30 bestehende Baueinheit für eine Trommelbremse dargestellt. Eine solche Baueinheit wird als sogenannter Reparatursatz auch separat verkauft. Anstelle des in der Trommelbremse vorhandenen Widerlagers 25 ist zwischen die beiden Bremsbacken 12 und 14 ein beispielsweise aus Kunststoff bestehendes Zwischenstück 92 gesetzt, das für eine Abstützung der von der in Fig. 6 unteren Bremsbackenrückzugsfeder 24 ausgeübten Kraft sorgt und so den Zusammenhalt der dargestellten Baueinheit während der Lagerung und dem Vertrieb einer solchen Baueinheit sicherstellt.

## Patentansprüche

1. Baueinheit für eine Trommelbremse (10), mit
- zumindest einer Bremsbacke (12) und einer Nachstelleinrichtung (32), die eine Nachstellstrebe (34), ein Klinken-Rastrad-Getriebe und einen die Klinke (52) aufweisenden Nachstellhebel (40) umfaßt, wobei die Bremsbacke (12) einen Steg (22) aufweist, an dem sich die Nachstellstrebe (34) abstützt und an dem der Nachstellhebel (40) mittels eines Lagerstiftes (56) schwenkbar gelagert ist,
**dadurch gekennzeichnet, daß** der Lagerstift (56) an einem separaten Haltebauteil (66) befestigt ist, das klemmend auf den Steg (22) der Bremsbacke (12) aufschiebbar ist und das mindestens eine erste Abkröpfung (84) aufweist, die in eine im Steg (22) vorhandene Ausnehmung (86) formschlüssig eingreift.

2. Baueinheit nach Anspruch 1,
**dadurch gekennzeichnet, daß** das Haltebauteil (66) eine plattenförmige Basis (68) umfaßt, die auf dem Bremsbackensteg (22) aufliegt und aus der sich der Lagerstift (56) senkrecht zum Steg (22) erstreckt.

3. Baueinheit nach Anspruch 2,
**dadurch gekennzeichnet, daß** die plattenförmige Basis (68) eine Durchgangsöffnung (70) aufweist, in der der Lagerstift (56) aufgenommen ist.

4. Baueinheit nach Anspruch 3,
**dadurch gekennzeichnet, daß** die plattenförmige Basis (68) um die Durchgangsöffnung (70) herum aus der Ebene der Basis (68) kegelstumpfförmig vom Bremsbackensteg (22) weg verformt ist, wobei der Durchmesser der Durchgangsöffnung (70) geringförmig kleiner als der Durchmesser des Lagerstiftes (56) ist.

5. Baueinheit nach Anspruch 4,
**dadurch gekennzeichnet, daß** der Lagerstift (56) von einer Stahlhohlniete gebildet ist, deren Fuß (72) unterhalb der kegelstumpfförmigen Verformung (74) und in der Ebene der plattenförmigen Basis (68) angeordnet ist.

6. Baueinheit nach einem der vorhergehenden Ansprüche,
**dadurch gekennzeichnet, daß** das Haltebauteil (66) einen mit der plattenförmigen Basis (68) verbundenen, U-förmigen Abschnitt (76) aufweist, der auf den Bremsbackensteg (22) aufschiebbar ist, und daß die erste Abkröpfung (84) entfernt von dem U-förmigen Abschnitt (76) angeordnet ist.

7. Baueinheit nach Anspruch 6,
**dadurch gekennzeichnet, daß** der U-förmige Abschnitt (76) zwei sich gleichsinnig erstreckende und zueinander annähernd parallele Schenkel (78, 80) aufweist, deren Abstand voneinander im Bereich des freien Endes des Schenkels (80) oder der Schenkel (78, 80) kleiner als die Dicke des Bremsbackensteges (22) ist.

8. Baueinheit nach Anspruch 7,
**dadurch gekennzeichnet, daß** ein Schenkel (78) Teil der plattenförmigen Basis (68) des Haltebauteils (66) ist.

9. Baueinheit nach einem der vorhergehenden Ansprüche,
**dadurch gekennzeichnet, daß** das Haltebauteil (66) eine entgegengesetzt zur ersten Abkröpfung (84) gerichtete zweite Abkröpfung (88) zur radialen Abstützung der Nachstellstrebe (34) aufweist.

10. Baueinheit nach Anspruch 9,
**dadurch gekennzeichnet, daß** das Haltebauteil (66) eine gleichsinnig zur zweiten Abkröpfung (88) gerichtete und benachbart derselben angeordnete dritte Abkröpfung (90) derart aufweist, daß die zweite Abkröpfung (88) die Nachstellstrebe (34) radial innen und die dritte Abkröpfung (90) die Nachstellstrebe (34) radial außen abstützt.

11. Baueinheit nach einem der vorhergehenden Ansprüche,
**dadurch gekennzeichnet, daß** das Haltebauteil (66) aus Federstahl besteht.

12. Baueinheit nach einem der vorhergehenden Ansprüche,
**dadurch gekennzeichnet, daß** die Baueinheit zwei Bremsbacken (12, 14) umfaßt, zwischen denen sich zwei Bremsbackenrückzugsfedern (23, 24) erstrecken.

13. Trommelbremse, insbesondere für ein Kraftfahrzeug, **gekennzeichnet durch** eine Baueinheit nach einem der vorhergehenden Ansprüche.

## Claims

1. A structural unit for a drum brake (10), comprising
- at least one brake shoe (12) and one adjusting device (32) which comprises an adjusting strut (34), a ratchet-detent wheel mechanism and an adjusting lever (40) comprising the ratchet (52), with the brake shoe (12) comprising a web (22) against which the adjusting strut (34) rests and at which the adjusting lever (40) is pivotably mounted by means of a bearing pin (56),
**characterised in that** the bearing pin (56) is attached at a separate holding component (66) which can be slid onto the web (22) of the brake shoe (12) in a clamping manner and which comprises at least one first offset (84) which is in positive engagement with a recess (86) provided in the web (22).

2. The structural unit according to Claim 1,
**characterised in that** the holding component (66) comprises a plate-shaped base (68) which rests on the brake shoe web (22) and from which the bearing pin (56) extends at right angles to the web (22).

3. The structural unit according to Claim 2,
**characterised in that** the plate-shaped base (68) comprises an opening (70) which accommodates the bearing pin (56).

4. The structural unit according to Claim 3,
**characterised in that** the plate-shaped base (68) is formed about the opening (70) as a truncated cone from the plane of the base (68) away from the brake shoe web (22), with the diameter of the opening (70) being slightly smaller than the diameter of the bearing pin (56).

5. The structural unit according to Claim 4,
**characterised in that** the bearing pin (56) is constituted by a hollow steel rivet whose foot (72) is arranged below the truncated cone-shaped form (74) and in the plane of the plate-shaped base (68).

6. The structural unit according to one of the previous claims, **characterised in that** the holding component (66) comprises a U-shaped section (76) which is connected with the plate-shaped base (68) and can be slid onto the brake shoe web (22), and that the first offset (84) is arranged remote from the U-shaped section (76).

7. The structural unit according to Claim 6,
**characterised in that** the U-shaped section (76) comprises two legs (78, 80) extending in the same direction and being approximately parallel to each other whose distance from each other in the area of the free end of the leg (80) or the legs (78, 80) is smaller than the thickness of the brake shoe web (22).

8. The structural unit according to Claim 7,
**characterised in that** one leg (78) is part of the plate-shaped base (68) of the holding component (66).

9. The structural unit according to one of the previous claims, **characterised in that** the holding component (66) comprises a second offset (8) which is directed in the opposite sense of the first offset (84) for the radial support of the adjusting strut (34).

10. The structural unit according to Claim 9,
**characterised in that** the holding component (66) is provided with a third offset (90) which extends in the same sense as the second offset and is arranged adjacent to same in such a manner that the second offset (88) supports the adjusting strut (34) at a radially inner position and the third offset (90) supports the adjusting strut (34) at a radially outer position.

11. The structural unit according to one of the previous claims, **characterised in that** the holding component (66) consists of a spring-grade steel.

12. The structural unit according to one of the previous claims, **characterised in that** the structural unit comprises two brake shoes (12, 14) between which two brake shoe return springs (23, 24) extend.

13. A drum brake, in particular for a motor vehicle,
**characterised by** a structural unit according to one of the previous claims.

## Revendications

1. Unité constitutive pour frein à tambour (10), comprenant
- au moins un segment de frein (12) et un système de réglage (32) qui comprend une biellette de réglage (34), une transmission à cliquet et roue d'encliquetage et un levier de réglage (40) présentant le cliquet (52), le segment de frein (12) présentant une barrette (22) sur laquelle la biellette de réglage (34) s'appuie et sur laquelle le levier de réglage (40) est monté pivotant au moyen d'une goupille de palier (56),
**caractérisée en ce que** la goupille de palier (56) est fixée à une pièce de maintien (66) séparée qui peut coulisser avec pincement sur la barrette (22) du segment de frein (12) et qui présente au moins un premier coude rabattu (84) qui pénètre dans un creux (86) présent dans la barrette (22) pour réaliser une liaison mécanique.

2. Unité constitutive selon la revendication 1,
**caractérisée en ce que** la pièce de maintien (66) comprend une base (68) en forme de plaque qui est appliquée sur la barrette du segment de frein (22) et à partir de laquelle la goupille de palier (56) s'étend perpendiculairement à la barrette (22).

3. Unité constitutive selon la revendication 2,
**caractérisée en ce que** la base (68) en forme de plaque présente un passage (70) dans lequel est reçue la goupille de palier (56).

4. Unité constitutive selon la revendication 3,
**caractérisée en ce que** la base (68) en forme de plaque est déformée en tronc de cône autour du passage (70) à partir du plan de la base (68) dans le sens de l'éloignement du segment de frein (22), le diamètre du passage (70) étant légèrement inférieur au diamètre de la goupille de palier (56).

5. Unité constitutive selon la revendication 4,
**caractérisée en ce que** la goupille de palier (56) est formée par un rivet creux en acier dont le pied (72) est disposé au-dessous de la déformation en tronc de cône (74) et dans le plan de la base (68) en forme de plaque.

6. Unité constitutive selon l'une quelconque des revendications précédentes,
**caractérisée en ce que** la pièce de maintien (66) présente une portion en forme de U (76) reliée à la base (68) en forme de plaque, qui peut coulisser sur la barrette de segment de frein (22) et **en ce que** le premier coude rabattu (84) est disposé éloigné de la portion en forme de U (76).

7. Unité constitutive selon la revendication 6,
**caractérisée en ce que** la portion en forme de U (76) présente deux branches (78, 80) s'étendant dans le même sens et approximativement parallèlement entre elles et dont l'espacement dans la zone de l'extrémité libre de la branche (80) ou des branches (78, 80) est inférieure à l'épaisseur de la barrette du segment de frein (22).

8. Unité constitutive selon la revendication 7,
**caractérisée en ce qu'**une branche (78) est une partie de la base (68) en forme de plaque de la pièce de maintien (66).

9. Unité constitutive selon l'une quelconque des revendications précédentes,
**caractérisée en ce que** la pièce de maintien (66) présente un deuxième coude rabattu (88) dirigé dans le sens opposé au premier coude rabattu (84) pour le support radial de la biellette de réglage (34).

10. Unité constitutive selon la revendication 9,
**caractérisée en ce que** la pièce de maintien (66) présente un troisième coude rabattu (90) dirigé dans le même sens que le deuxième coude rabattu (88) et à proximité de celui-ci de telle façon que le deuxième coude rabattu (88) supporte la biellette de réglage (34) radialement à l'intérieur et le troisième coude rabattu (90) supporte la biellette de réglage (34) radialement à l'extérieur.

11. Unité constitutive selon l'une quelconque des revendications précédentes,
**caractérisée en ce que** la pièce de maintien (66) se compose est en acier souple.

12. Unité constitutive selon l'une quelconque des revendications précédentes,
**caractérisée en ce que** l'unité constitutive comprend deux segments de frein (12, 14) entre lesquels s'étendent deux ressorts de rappel de segments de frein (23, 24).

13. Frein à tambour, en particulier pour une automobile,
**caractérisé par** une unité constitutive selon l'une quelconque des revendication précédentes.
